Europäisches Patentamt

European Patent Office

Office européen des brevets

(19)

(11) **EP 1 476 627 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(21) Anmeldenummer: **03704649.7**

(22) Anmeldetag: **19.02.2003**

(51) Int Cl.:
***E05F 15/00*** *(2006.01)*    ***H02H 7/085*** *(2006.01)*

(86) Internationale Anmeldenummer:
**PCT/EP2003/001643**

(87) Internationale Veröffentlichungsnummer:
**WO 2003/071072 (28.08.2003 Gazette 2003/35)**

(54) **VERFAHREN ZUM ERKENNEN EINER HINDERNISSITUATION EINES MOTORISCH ANGETRIEBENEN BEWEGTEN ELEMENTES**

METHOD FOR RECOGNISING AN OBSTRUCTIVE SITUATION IN A MOTOR DRIVEN ELEMENT

PROCEDE DE DETECTION D'UN D'OBSTACLE DANS LA TRAJECTOIRE D'UN ELEMENT MOBILE MOTORISE

(84) Benannte Vertragsstaaten:
**AT BE BG CH CY CZ DE DK EE ES FI FR GB GR HU IE IT LI LU MC NL PT SE SI SK TR**

(30) Priorität: **21.02.2002 DE 10207234**

(43) Veröffentlichungstag der Anmeldung:
**17.11.2004 Patentblatt 2004/47**

(73) Patentinhaber: **Leopold Kostal GmbH & Co. KG 58507 Lüdenscheid (DE)**

(72) Erfinder: **KÖNIGSHAUS, Markus 59174 Kamen (DE)**

(56) Entgegenhaltungen:
**DE-A- 19 921 232        DE-A- 19 941 475
US-A- 5 734 244         US-A- 6 051 945**

**Beschreibung**

Die Erfindung betrifft ein Verfahren zum Erkennen einer Hindernissituation eines motorisch angetriebenen bewegten Elementes durch Auswerten einer eine Drehgeschwindigkeitsinformation des Motors beinhaltenden Größe, wobei ausgehend von einem aktuellen Zeitpunkt die ermittelten Werte der die Drehgeschwindigkeitsinformation beinhaltenden Größe unmittelbar zurückliegender Erfassungszeitpunkte untersucht werden.

Zum Betrieb eines motorisch, etwa elektromotorisch angetriebenen Elementes werden Verfahren eingesetzt, mit denen Hindemissituationen, beispielsweise Einklemmfälle, detektierbar sind. Derartige Verfahren werden beispielsweise zum Betrieb eines Fensterhebermotors zum Schließen einer Scheibe eines Kraftfahrzeuges eingesetzt. Mit dem Verfahren soll sichergestellt werden, daß beim Schließen der Scheibe keine Gegenstände insbesondere keine Körperteile von Personen, in dem sich schließenden Scheibenspalt eingeklemmt werden. Als Drehgeschwindigkeitsinformation des Motors wird die Motorperiode benutzt, die in aller Regel durch Anordnen eines in Umfangsrichtung mehrpolig ausgebildeten Magneten auf der Ankerwelle des Antriebsmotors bereitgestellt wird. Die jeweilige Polarität wird mit einem ortsfesten Hall-Sensor bzw. mit einer ortsfesten Hall-Sensoranordnung erfaßt. Über die zeitliche Länge einer erfaßten Polarität, die ein Analogon zu einem bestimmten Drehwinkelbetrag der Motordrehbewegung darstellt, ist die Drehgeschwindigkeit ermittelbar. Bei einem Einklemmfall verlängern sich die Motorperioden, da der Motor durch das Hindernis abgebremst wird. Zur Detektion einer solchen Hindernissituation bzw. eines solchen Einklemmfalles wird die Länge jeder erfaßten Motorperiode mit einem vordefinierten Schwellwert verglichen. Die Größe des Schwellwertes ist so konzipiert, daß bei einer Schließbewegung der Scheibe unter Normalbedingungen der Schwellwert nicht überschritten wird. Wird dieser auch als Abschaltwert bezeichnete Schwellwert überschritten, deutet dies auf einen Einklemmfall hin. Zur Verifikation, daß bei Überschreiten des Abschaltwertes mit größerer Wahrscheinlichkeit ein Einklemmfall tatsächlich gegeben ist, werden wenige weitere Motorperioden bezüglich ihrer Länge ausgewertet. Überschreiten diese ebenfalls den Abschaltwert, wird auf das Vorliegen eines Einklemmfalles geschlossen und der Motor zum Absenken der Scheibe umgeschaltet.

Bei einem in der US-Patentschrift 5,734,244 beschriebenen gattungsgemäßen Verfahren werden Kraft- bzw. Drehzahländerungen von Meßintervall zu Meßintervall so lange aufintegriert, wie von Meßintervall zu Meßintervall eine gewisse Mindest-Steigerung erzielt wird. Fällt die Kraftsteigerung dabei unter einen bestimmten Wert, so beginnt die Aufintegrierung erneut beim Wert Null. Der aufintegrierte Wert wird dabei ständig mit einem festen Schwellenwert verglichen, und beim Überschreiten desselben wird ein Einklemmfall erkannt.

Das in DE 199 41 475 A1 offenbarte Verfahren ist gewissenmaßen eine Verfeinerung des zuvor beschriebenen Verfahrens. Bei diesem wird nicht sofort beim Überschreiten des festen Schwellenwerts durch den aufintegrierten Wert der Drehzahländerungen auf einen Einklemmfall geschlossen. Es schließt sich stattdessen ein zweiter Prüfungsschritt an, in dem dieser aufintegrierte Wert zusätzlich mit einem weiteren, in diesem Falle nicht konstanten sondern zeitabhängig sich ändernden Schwellenwert verglichen wird. Beim Überschreiten dieses zeitabhängig sich ändernden Schwellenwerts wird dann ein Einklemmfall erkannt.

US-Patentschrift 6,051,945 schließlich zeigt ein Verfahren, bei dem aus der Motorkraft, den wirkenden Reibungskräften sowie aus den dynamischen Bewegungsgrößen eine Einklemmkraft berechnet wird. Diese Einklemmkraft wird wiederum mit einem festgelegten maximalen Einklemmkraft-Schwellenwert verglichen, und beim Überschreiten des Schwellenwerts wird ein Einklemmfall erkannt.

Auch wenn mit diesem Verfahren grundsätzlich in zufriedenstellendem Maße Einklemmfälle beim Schließen motorisch angetriebener Scheiben bei Kraftfahrzeugen detektierbar sind, wird systemseitig auch in anderen Fällen auf das Vorhandensein einer Einklemmsituation geschlossen, nämlich immer dann, wenn die oben genannten Bedingungen erfüllt sind. Diese sind auch dann erfüllt, wenn die Scheibe beim Zufahren Schlägen ausgesetzt ist, etwa beim Durchfahren von Schlaglöchern bei einer Schlechtwegfahrt. Derartige Fehlumschaltungen können grundsätzlich dadurch reduziert werden, daß der Abschaltwert relativ hoch gesetzt wird. Bei einem derart eingestellten Erkennungsverfahren erfolgt jedoch die Erkennung eines Einklemmfalles erst in einem relativ späten Zeitpunkt.

Ausgehend von diesem diskutierten Stand der Technik liegt der Erfindung daher die Aufgabe zugrunde, ein eingangs genanntes, gattungsgemäßes Verfahren dergestalt weiterzubilden, daß das Erkennen einer Hindernissituation, beispielsweise eines Einklemmfalles beim Schließen einer motorisch angetriebenen Scheibe bereits zu einem möglichst frühen Zeitpunkt erkannt wird, ohne jedoch die beim vorbekannten Stand der Technik sich einstellenden Nachteile eines zu tief angesetzten Abschaltwertes in Kauf nehmen zu müssen.

Diese Aufgabe wird erfindungsgemäß dadurch gelöst, daß durch einen Mustervergleich des Änderungsverhaltens der ermittelten Werte mit einem eine für die Hindernissituation aufgrund der sich einstellenden Verlangsamung der Drehgeschwindigkeit des Motors typische zeitliche Entwicklung der untersuchten Größe wiedergebenden, sich über mehrere Werte erstreckenden Wertebereich festgestellt wird, ob eine solche Hindernissituation vorliegt.

Bei dem beanspruchten Verfahren wird systemseitig auf das Vorliegen einer Hindernissituation dann geschlossen, wenn sich die ermittelten Werte unmittelbar zurückliegender Erfassungszeitpunkte bezüglich ihres Änderungsverhaltens zueinander über die Zeit in einem für die zu erkennende Hindernissituation typischen, sich über mehrere Werte erstreckenden Wertebereich der untersuchten Größe befinden. Somit erfolgt beim Gegenstand dieses Verfahrens ein Mustervergleich, wobei eine Hindernissituation nicht mit einem Schwellwert, sondern mit dem typischen Änderungsverhalten der ermittelten Werte bei Auftreten einer solchen Situation als Vergleichsbasis dient. Mit einem solchen Mustervergleich ist mit sehr viel höherer Genauigkeit das tatsächliche Vorliegen einer Hindernissituation erkennbar. Für den Fall, daß das Verfahren zum Betreiben einer elektromotorisch angetriebenen Scheibe eines Kraftfahrzeuges eingesetzt wird und mit diesem Verfahren ein Einklemmfall zu detektieren ist, ist der zum Vergleich vorgesehene Wertebereich einer solchen Einklemmsituation nachgestellt. Somit stellt der Vergleichswertebereich eine typische zeitliche Entwicklung der sich aus der die Drehgeschwindigkeitsinformation beinhaltenden Größe ermittelten Werte als Maß für die sich einstellende Verlangsamung der Drehgeschwindigkeit des Motors dar. Ein solcher Einklemmfall ist erkennbar an einer nicht linearen Verlangsamung der Drehgeschwindigkeit des Motors und somit anhand einer sich dergestalt vergrößernden Motorperiode erkennbar, die die federartige Kraftanstiegsrate widerspiegelt.

Grundsätzlich eignet sich dieses Verfahren auch, um anhand unterschiedlicher Vergleichswertebereiche, darstellend unterschiedliche Hindemissituationsmuster, aus einer Anzahl unterschiedlicher Hindernisse, die sich durch unterschiedliche Motoränderungsprotokolle auszeichnen, unter schiedliche Hindernissituationen voneinander zu unterscheiden. Auf diese Weise kann eine tatsächliche Einklemmsituation unterschieden werden von einem in der Führung der Scheibe befindlichen Hindernis. Es kann dann in Abhängigkeit von der detektierten Hindernissituation systemseitig auf unterschiedliche Weise reagiert werden, beispielsweise durch Umschalten des Antriebsmotors im Falle eines Einklemmens und lediglich durch Anhalten des Motors etwa in einem anderen Falle. Auf diese Weise ist ebenfalls das Einfahren der Scheibe in die obere Dichtung detektierbar.

Um eine hinreichende Übereinstimmung zwischen dem eine Hindernissituation darstellenden Vergleichswertebereich und der Folge der aktuell ermittelten Werte zu erreichen, ist es grundsätzlich ausreichend, daß drei aufeinander folgende aktuell ermittelte Werte Teil des die Hindernissituation definierten Wertebereiches sind. Aus Redundanzgründen wird es jedoch vorteilhaft sein, fünf bis sieben aufeinander folgende aktuell ermittelte Werte als Maß einer hinreichenden Übereinstimmung vorzusehen.

Die Ermittlung der Werte aus der die Drehgeschwindigkeitsinformation enthaltenden Größe kann unter Zugrundelegung eines Kraftmodells erfolgen, durch das Systemkomponenten und Systemparameter berücksichtigt sind. Anstelle eines Kraftmodells kann ebenfalls ein Energiemodell des Systems herangezogen werden, wobei letzteres ebenfalls zur Interpolation des oder der nächsten bei einem Hindernisfall zu erwartenden Wertes eingesetzt werden kann.

Nachfoigend ist die Erfindung anhand eines Ausführungsbeispieles unter Bezugnahme auf die beigefügten Figuren beschreiben. Es zeigen:

Fig. 1    Ein über die Zeit aufgetragenes Diagramm der aus einer eine Drehgeschwindigkeitsinformation enthaltenden Größe ermittelten Werte beim Eintreten einer Hindernissituation nach einem Betrieb unter Normalbedingungen und

Fig. 2    ein über die Zeit aufgetragenes Motorperiodendiagramm.

Auf der Welle eines elektrischen Fensterhebermotors eines Kraftfahrzeuges ist ein in Umfangsrichtung vierpoliger Magnet angeordnet. Eine ortsfest zu diesem Magneten angeordnete Hall-Sensoranordnung dient zur Erfassung der jeweilig am Hall-Sensor anliegenden Polarität des Magneten. Somit ist bei diesem dargestellten Ausführungsbeispiel eine Umdrehung der Ankerwelle um 360° durch das Durchlaufen von vier, im folgenden als Motorperioden bezeichneten Perioden gekennzeichnet. Die Länge einer solchen Motorperiode ist somit ein unmittelbares Maß für die Drehgeschwindigkeit der Fensterhebermotors.

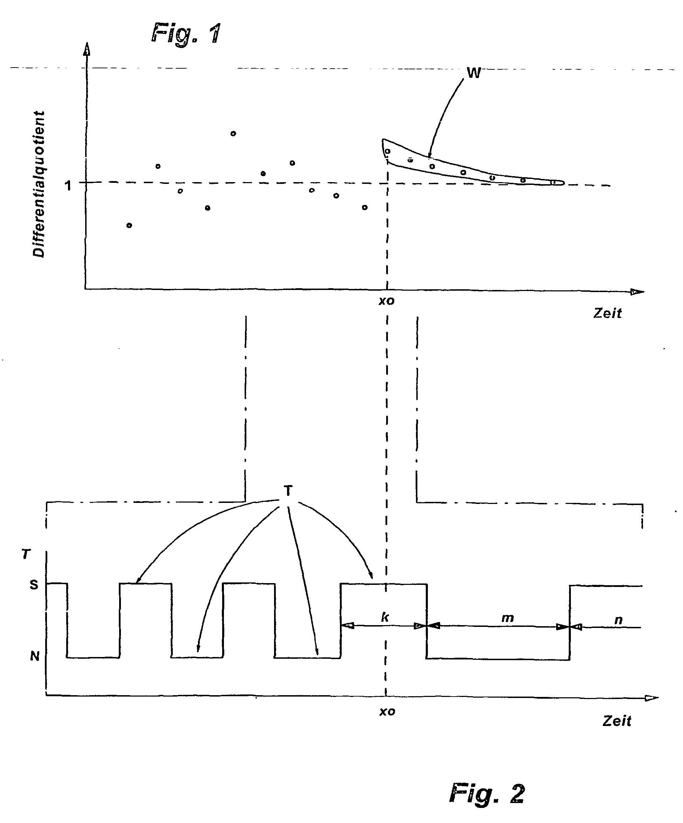

Bei einem Schließvorgang der durch den Fensterhebermotor angetriebenen Scheibe unter Normalbedingungen dreht sich der Fensterhebermotor im Idealfall konstant; im Realfall ist dieser jedoch statistisch verteilten Schwankungen unterworfen. Diese Schwankungen sind begründet durch das Kraftübertragungssystem und/oder durch die nicht konstante Reibung der Scheibe in ihrer Führung. Ein Betrieb des Antriebsmotors mit gleichbleibender Drehgeschwindigkeit ist in Figur 2 durch die gleichbleibende Länge der ersten Motorperioden T erkennbar. Im Zeitpunkt $x_0$ berührt die die Fensteröffnung schließende Scheibe ein Hindemis, wodurch der Fensterhebermotor abgebremst wird. Dies resultiert in einer Zunahme der Dauer der sich an den Zeitpunkt $x_0$ anschließenden Motorperioden T.

Unter Zugrundelegung eines Kraftmodells bei diesem Ausführungsbeispiel wird nach jedem erfaßten Polaritätswechsel und somit nach jedem Periodendurchlauf die jeweils zuletzt erfaßte Motorperiodendauer in einem Ringspeicher mit beispielsweise fünf Speicherplätzen gespeichert.

Unter Zugrundelegung eines vereinfachten Kraftmodells gilt bei einem Schließvorgang der Scheibe unter Normalbedingungen

$$\vec{F}_{ges} = \vec{F}_M + \vec{F}_g + \vec{F}_R = 0 \,,$$

wobei $F_M$ die Motorkraft, $F_g$ die Gewichtskraft der Scheibe und $F_R$ die Reibungskraft sind. Bei den letztgenannten Größen handelt es sich um Konstanten. Somit ist die Motorkraft $F_M$ bei einem Normalbetrieb konstant, so daß eine konstante Motorperiode T erhaltbar ist (vgl. auch Figur 2). Im Zeitpunkt $x_0$ wird die Scheibe gegen ein Hindernis gefahren, so daß anschließend eine Kraftänderung eintritt dergestalt, daß zu der ursprünglichen Motorkraft $F_M$ die als Federkraft $F_F$ ausgedrückte Nachgiebigkeit des angefahrenen Gegenstandes hinzukommt, so daß sich folgende Gleichung ergibt:

$$\vec{F}_{ges} = \vec{F}_M + \vec{F}_F + \vec{F}_g + \vec{F}_R \neq 0 \,,$$

wobei $F_{ges}$ die Gesamtkraft und $F_F$ die Federkraft ist. Entsprechend der Federkraft $F_F$ verlängert sich die aktuelle Motorperiode, in der das Hindernis angefahren wird. Ebenfalls verlängern sich die nachfolgenden Motorperioden, und zwar um die Kraft der Feder. Ausdrükken läßt sich dies auch über die Motorperiode, die vor dem Zeitpunkt $x_0$ konstant ist und die durch die Einklemmsituation in Abhängigkeit von der Federkraft verlängert wird. Nach Zusammenfassen der konstanten Faktoren läßt sich dieses ausdrücken als

$$T = K + \frac{B}{1 - A \times x}.$$

Bei dieser Beschreibung des Motorperiodenverlaufes ist die Masseträgheit der Scheibe unberücksichtigt. Dies wird im vorliegenden Fall jedoch gerade ausgenutzt, so daß im Auflaufpunkt der Scheibe auf das Hindernis die ermittelbare Federkonstante zunächst niedriger erscheint und sich mit zunehmendem Einfahren in das Hindernis erhöht.

Die oben genannte Gleichung weist drei unbekannte Konstanten (K, B, A) auf, die jedoch im Rahmen einer Gleitkommaberechnung aus drei Stützstellen ermittelt werden können. Da jedoch in aller Regel eine solche Gleitkommaberechnung die Leistung eines heutzutage in der Praxis eingesetzten Mikrocontrollers überschreitet, wird in dem dargestellten Ausführungsbeispiel das Anstiegsverhalten der Motorperiode T bewertet. Bei dieser Bewertung werden mehrere aufeinanderfolgende Periodendauermessungen bezüglich ihres jeweiligen Änderungsverhaltens zu der vorangegangenen Periode untersucht entsprechend folgender Gleichung

$$\frac{T_m - T_n}{T_k - T_m} = 1$$

Die sich aus dieser Gleichung ergebende Aussage zeigt, daß der Differentialquotient von drei unmittelbar aufeinanderfolgenden Motorperioden in dem vereinfachten Kräftemodell bei einem Einklemmfall gleich 1 ist. Gleichfalls wird aus dieser Gleichung deutlich, daß im Idealfall bei konstanter Motordrehzahl und somit konstanten Motorperioden diese Gleichung nicht definiert ist. Da in der Praxis diese Idealisierung jedoch nicht eintritt, streut das Ergebnis, was zu deutlich schwankenden Differentialquotienten führt, wie dies in dem Diagramm der Figur 1 vor dem Zeitpunkt $x_0$ dargestellt ist. Durch die Definition des Einklemmfalles im vorliegenden Fall dadurch, daß der Differentialquotient "1" ergeben soll, liegt im Einklemmfall ein typisches Verhalten der sich ergebenden Differentialquotienten vor. Diese liegen zu Beginn des Einklemmfalles aufgrund der in dem Kräftemodell nicht berücksichtigten Masseträgheit der Scheibe etwas höher als "1" und reduzieren sich sukzessive mit der Erfassung jeder weiteren Motorperiode und den daraus gebildeten Differentialquotienten. Hinterlegt wird daher in dem Ringspeicher jeweils der zuletzt ermittelte Differentialquotient. In Figur 1 ist ein Wertebereich W angegeben, in dem die sich bei einem Einklemmfall ergebenden Differentialquotienten aufgetragen sind. Die in diesem Wertebereich W eingetragenen einzelnen Differentialquotienten sind mit einem Toleranzbereich versehen. Im Falle einer Einklemmsituation muß somit die Bedingung erfüllt sein, daß bei zwei aufeinander folgenden Differentialquotienten der zuletzt erfaßte kleiner ist als der jeweils vorausgegangene. Überdies kann als weiteres Kriterium betrachtet werden, daß die Differenz der Differentialquotienten eines ersten aus zwei aufeinander folgenden Differentialquotienten gebildeten Differentialquotientenpaares größer ist als die Differenz der Differentialquotienten eines weiteren Differentialquotientenpaares, gebildet aus dem zuletzt ermittelten Differentialquotienten des ersten Differentialquotientenpaares und dem unmittelbar anschließend gebildeten Differentialquotienten. Im vorliegenden Falle ist vorgesehen, daß fünf aufeinander folgende Differentialquotienten diese Bedingungen erfüllen müssen, damit systemseitig auf einen Einklemmfall geschlossen werden kann.

Aus der Beschreibung dieses Verfahrens wird deutlich, daß nach einmaligem Eichen des jeweiligen Systems, beispielsweise eines Fensterhebersystems bei einem Kraftfahrzeug durch Festlegen des Wertebereiches auf einfache Weise und mit hoher Sicherheit ein Einklemmfall detektierbar ist. Schlechtwegfahrten, die als Schläge auf die sich schließende Scheibe wirken, machen sich zwar in einer kurzzeitigen Änderung der Motorperiode bemerkbar. Jedoch genügen die daraus gebildeten Differentialquotienten nicht den genannten Bedingungen und fallen daher nicht in das in Figur 1 beispielsweise beschriebene Muster. Daher werden sämtliche, auf die Scheibe einwirkenden Kräfte unberücksichtigt bleiben, die sich nicht in einer federähnlichen Krafterhöhung im Gesamtsystem bemerkbar machen. Denn nur wenn dieses vorliegt, sind Differentialquotienten ermittelbar, die in Bezug auf die jeweils vorangegangenen den oben genannten Kriterien zum Erkennen eines Einklemmfalles genügen. Da dies unabhängig von der absoluten Kraft ist, ist dieses Verhalten unabhängig von der tatsächlichen, einen Einklemmfall darstellenden Federkraft. Somit wird auf eine Einklemmsituation bereits dann geschlossen, wenn ein geringer federartig wirkender Widerstand auf die Schließbewegung der Scheibe einwirkt. Somit ist ein Einklemmfall zu einem sehr frühen Zeitpunkt detektierbar, wobei im vorliegenden Fall bei einer Berücksichtigung von fünf den Kriterien genügenden Differentialquotienten die Detektion des Einklemmfalles bereits nach einem Drehwinkelbetrag der Ankerwelle von 450° erfolgt.

**Patentansprüche**

1. Verfahren zum Erkennen einer Hindernissituation eines motorisch angetriebenen bewegten Elementes durch Auswerten einer eine Drehgeschwindigkeitsinformation des Motors beinhaltenden Größe, wobei ausgehend von einem aktuellen Zeitpunkt die ermittelten Werte der die Drehgeschwindigkeitsinformation beinhaltenden Größe unmittelbar zurückliegender Erfassungszeitpunkte untersucht werden, **dadurch gekennzeichnet, daß** durch einen Mustervergleich des Änderungsverhaltens der ermittelten Werte mit einem eine für die Hindernissituation aufgrund der sich einstellenden. Verlangsamung der Drehgeschwindigkeit des Motors typische zeitliche Entwicklung der untersuchten Größe wiedergebenden, sich über mehrere Werte erstreckenden Wertebereich festgestellt wird, ob eine solche Hindernissituation vorliegt.

2. Verfahren nach Anspruch 1, **dadurch gekennzeichnet, daß** der die Hindernissituation darstellende Wertebereich der untersuchten Größe das Änderungsverhalten der untersuchten Größe darstellt, das sich einstellt, wenn das motorisch angetriebene Element gegen einen Gegenstand fährt und dieses zu einer nichtlinearen und somit federartigen Kraftanstiegsrate führt.

3. Verfahren nach Anspruch 1 oder 2, **dadurch gekennzeichnet, daß** der Vergleichswertebereich einen Toleranzbereich aufweist.

4. Verfahren nach Anspruch 2 oder 3, **dadurch gekennzeichnet, daß** der die Hindernissituation darstellende Wertebereich durch einen nicht linearen Abfall mit zunehmender Zeit bestimmt ist.

5. Verfahren nach einem der Ansprüche 1 bis 4, **dadurch gekennzeichnet, daß** die die Drehgeschwindigkeitsinformation beinhaltende Größe als die Zeit ermittelt wird, innerhalb derer sich die Ankerwelle des Motors um einen festgelegten Winkelbetrag dreht.

6. Verfahren nach einem der Ansprüche 1 bis 5, **dadurch gekennzeichnet, daß** eine hinreichende Übereinstimmung zwischen dem Wertebereich und der Folge der aktuell erfaßten Werte vorliegt, wenn zumindest drei aufeinander folgende Werte Teil des die Hindernissituation definierenden Vergleichswertebereichs sind.

7. Verfahren nach Anspruch 6, **dadurch gekennzeichnet, daß** die aufeinander folgend ermittelten Werte sukzessive abgespeichert werden, die für eine hinreichende Übereinstimmung benötigt werden.

8. Verfahren nach einem der Ansprüche 1 bis 7, **dadurch gekennzeichnet, daß** das Verfahren zum Erkennen eines eine Schließbewegung einer motorisch angetriebenen Scheibe eines Kraftfahrzeuges behindernden Einklemmfalz eingesetzt wird.

**Claims**

1. Procedure for detecting an obstruction situation on a motor-driven moving element by evaluating a variable comprising information on the rotating speed of the motor, for which purpose the ascertained values of the variable comprising the information on the rotating speed of immediately preceding moments of acquisition are analysed, starting from a current point of time, **characterised by** the fact that, as a result of comparing the pattern of the change performance of the ascertained values with a range of values extending over several values and, due to the ensuing deceleration of the rotating speed of the motor, reflecting a time-related development of the examined variable typical for the obstruction situation, it can be determined whether such an obstruction situation exists.

2. Procedure in accordance with Claim 1, **characterised by** the fact that the value range of the examined variable representing the obstruction situation represents the change performance of the examined variable that occurs when the motor-driven element runs against an object and this results in a non-linear and consequently spring-like force increase rate.

3. Procedure in accordance with Claim 1 or Claim 2, **characterised by** the fact that the range of comparison values shows a tolerance range.

4. Procedure in accordance with Claim 2 or Claim 3, **characterised by** the fact that the value range representing the obstruction situation is determined, with advancing time, by a non-linear drop.

**5.** Procedure in accordance with any of Claims 1 to 4, **characterised by** the fact that the variable containing the information on the rotating speed is determined as the time within which the rotor shaft of the motor rotates by a defined angular amount.

**6.** Procedure in accordance with any of Claims 1 to 5, **characterised by** the fact that there is adequate conformance between the value range and the sequence of the currently detected values if at least three consecutive values are part of the comparison value range defining the obstruction situation.

**7.** Procedure in accordance with Claim 6, **characterised by** the fact that the consecutively determined values required for adequate conformance are stored successively.

**8.** Procedure in accordance with any of Claims 1 to 7, **characterised by** the fact that the procedure is implemented in order to recognise an occurrence of pinching obstructing a closing movement of a motor-driven window of a motor vehicle.

**Revendications**

**1.** Procédé pour la détection d'une situation faisant obstacle à un élément mû par force motrice, par évaluation d'une donnée contenant une information sur la vitesse de rotation du moteur, les valeurs détectées de la donnée contenant l'information sur la vitesse de rotation à des moments de détection immédiatement précédents étant analysées à partir d'un moment actuel, **caractérisé en ce que**, par une comparaison d'un modèle du processus d'évolution des valeurs déterminées avec une gamme de plusieurs valeurs, représentant une évolution dans le temps, typique pour la présence d'un obstacle, en raison du ralentissement de la vitesse de rotation du moteur, il est constaté s'il s'agit d'une telle situation présentant un obstacle.

**2.** Procédé selon la revendication 1, **caractérisé en ce que** le domaine de valeurs de la grandeur analysée représentant une présence d'obstacle, représente le processus d'évolution de la grandeur analysée qui se présente lorsque l'élément entraîné de manière motorisée se heurte contre un objet et que ceci conduit à un accroissement de force non linéaire et, ce fait, genre élasticité.

**3.** Procédé selon la revendication 1 ou la revendication 2, **caractérisé en ce que** la gamme des valeurs de comparaison présente une marge de tolérance.

**4.** Procédé selon la revendication 2 ou la revendication 3, **caractérisé en ce que** la gamme de valeurs représentant une situation de présence d'obstacle est déterminée par une chute non linéaire avec durée croissante.

**5.** Procédé selon l'une des revendications 1 à 4, **caractérisé en ce que** la grandeur comprenant l'information sur la vitesse de rotation est déterminée en tant que temps au cours duquel l'arbre d'induit du moteur tourne d'une valeur d'angle fixée.

**6.** Procédé selon l'une des revendications 1 à 5, **caractérisé en ce qu'**il y a une concordance suffisante entre la gamme de valeurs et la séquence des valeurs actuellement captées, quand au moins trois valeurs successives font partie de la gamme des valeurs de comparaison définissant la situation de présence d'obstacle.

**7.** Procédé selon la revendication 6, **caractérisé en ce que** les valeurs captées à la suite les unes des autres, lesquelles sont nécessaires pour une concordance suffisante, sont mémorisées successivement.

**8.** Procédé selon l'une des revendications 1 à 7, **caractérisé en ce que** le procédé est utilisé pour reconnaître un cas de coincement mettant obstacle à un mouvement de fermeture d'une glace de véhicule automobile entraînée de manière motorisée.

## Fig. 1

## Fig. 2